Europäisches Patentamt

European Patent Office

Office européen des brevets

(11) Publication number : **0 560 496 A1**

(12) # EUROPEAN PATENT APPLICATION

(21) Application number : **93301041.5**

(22) Date of filing : **12.02.93**

(51) Int. Cl.[5] : **C08L 101/00,** // (C08L 101/00, 51:06)

(30) Priority : **24.02.92 US 840964**

(43) Date of publication of application :
**15.09.93 Bulletin 93/37**

(84) Designated Contracting States :
**AT BE CH DE DK ES FR GB GR IE IT LI LU MC NL PT SE**

(71) Applicant : **ROHM AND HAAS COMPANY**
**Independence Mall West**
**Philadelphia Pennsylvania 19105 (US)**

(72) Inventor : **Ilenda, Casmir Stanislaus**
**36 Sima Road**
**Holland, Pennsylvania 18966 (US)**
Inventor : **Williams, Donald Robert**
**426 Merion Drive**
**Newtown, Pennsylvania 18940 (US)**

(74) Representative : **Angell, David Whilton et al**
**ROHM AND HAAS (UK) LTD. European**
**Operations Patent Department Lennig House**
**2 Mason's Avenue**
**Croydon CR9 3NB (GB)**

(54) Processing of polar polymers and mixtures obtained thereby.

(57) Segmented copolymers of polyolefins with relatively high molecular weight poly(methacrylate) segments, known to be useful as melt strength additives for polyolefins and compatibilizers for blends of polyolefins and polar polymers, are also useful it levels of about 1 to about 15 weight percent in improving the processing properties of polar polymers, such as by decreasing the time for PVC to flux, by decreasing the temperature and pressure requirements for injection moulding, and by improving the melt strength ABS.

EP 0 560 496 A1

This invention is concerned with improving the processability of polar polymers by the addition of relatively low levels of certain polyolefin/poly(methacrylate) segmented copolymer, and certain of the blended compositions.

There are two major classes of polymeric additives useful in plastics technology. The better-known class comprises additives which improve the physical properties of the matrix resin; of these, best-known are impact modifiers for toughening the resin, compatibilizing additives which allow blending of two matrix resins, and additives which add certain key properties, such as gloss-reducing agents and sag-resistance improvers, additives for increasing modulus and additives for increasing heat distortion temperature values under various loads.

The second class of additives comprise so called "processing aids" which aid in the fabrication of the resin into useful objects. A number of resins, such as poly(vinyl chloride) (PVC) cannot be processed thermally without some decomposition prior to "fluxing", by which we mean the conversion of a solid resin by heat and shear into a molten plastic material capable of being processed by an extruder, melt calender, or the like. Other resins, having high melting points and softening temperatures, are aided in their processing by additives which allow processing at reduced temperatures or pressures. Another category of processing aids relates to the processing of the resin after "fluxing", such as lubrication to prevent sticking to hot metal surfaces, improved flow during moulding (generally related to decreased melt viscosity), and improved melt strength during thermoforming (which may also relate to higher modulus at the processing temperature). The processing aid may also aid in the elimination of melt fracture, which produces undesirable effects on the surface of the processed article, such as lower gloss, or a "sharkskin" appearance.

This invention is directed to extending the range of processing aids available for polar polymers. Additives for poly(vinyl chloride) which act as processing aids have been known for over thirty years. Many of these additives are high molecular weight polymers (>1,000,000) which are predominantly based on methyl methacrylate.

US-A-4,957,974 describes graft copolymers of a non-polar polyolefin having a weight-average molecular weight between about 50,000 and 1,000,000 chemically joined to a polymer derived from at least about 80% of an alkyl, aryl, substituted alkyl, substituted aryl, alkaryl, or substituted methacrylate ester and less than about 20% of an acrylic or styrenic monomer copolymerized therewith, having a weight-average molecular weight between about 20,000 to about 200,000. These graft copolymers are shown to be useful in adding melt strength to polyolefins during thermoforming of a shaped object and in compatiblizing polar polymers with polyolefins. The examples of this patent describe, as controls for blending examples, blends of low levels (5 and 15 phr, where phr is parts of additive per 100 parts of resin) of a polypropylene/ poly(methyl methacrylate) graft copolymer with PVC for the purposes of demonstrating little effect of the physical properties of the blend formed, but does not disclose or suggest utility in processing.

We have now found that segmented copolymers, such as graft copolymers of poly(methyl methacrylate) of relatively high molecular weight onto a non-polar, non-rubbery polyolefin, such as polypropylene, are useful at levels of about 1 to about 15 weight percent in improving the processing properties of polar polymers, such as by decreasing the time for PVC to flux, by decreasing the temperature and pressure requirements for injection moulding, and by improving the melt strength of ABS and our invention is directed to the use of the segmented copolymers for this purpose. More specifically, we have discovered a method for improving the processing of a polar resin, comprising

(a) admixing the polar resin with from about 1 to about 15 phr of a segmented polymer comprising segments of

(1) non-polar, non-rubbery polyolefin having a weight-average molecular weight between about 50,000 and 1,000,000;

(2) polymer derived from at least about 80% of an alkyl, aryl, substituted alkyl, substituted aryl, alkaryl, or substituted methacrylate ester and at most about 20% of an acrylic or styrenic monomer copolymerized therewith, having a weight-average molecular weight between about 20,000 to about 200,000;

(b) heating with agitation the mixture to a temperature whereby the blend is fluxed.

We further have discovered a blend comprising an engineering resin containing aryl groups in the main chain and from about 1 to about 15 phr of a segmented polymer comprising segments of

(1) non-polar, non-rubbery polyolefin having a weight-average molecular weight between about 50,000 and 1,000,000;

(2) a polymer derived from at least about 80% of an alkyl, aryl, substituted alkyl, substituted aryl, alkaryl, or substituted methacrylate ester and less than about 20% of an acrylic or styrenic monomer copolymerized therewith, having a weight-average molecular weight between about 20,000 to about 200,000.

Our invention also extends to the processing of polar resins using the segmented copolymers to improve the processing properties thereof. By "polar" resins we mean polymers containing significant amounts of atoms other than carbon and hydrogen, such as oxygen (in groups such as ether, ester, acid, ketone, hydroxyl, and the like), sulfur (in groups such as sulfide, sulfone, and the like), or nitrogen (in groups such as amide, amine, heterocyclic groups such as pyridine, and the like). Such polar resins include acrylonitrile-butadiene-styrene polymer, polyacetals, polyarylates, acrylic-styrene copolymers, acrylonitrile-styrene-acrylic polymers, acrylonitrile-styrene polymers modified with ethylene-propylene rubber, cellulosics, polyester-polyether block copolymers, polyesters such as polybutylene terephthalate and polyethylene terephthalate, and including liquid-crystal polyesters, polyetheramides, polyetheretherketones, polyetherimides, polyethersulfones, ethylene-vinyl alcohol copolymers, polyvinyl chloride, chlorinated polyvinyl chloride, polyvinylidene chloride and fluoride, styrene polymers such as styrene-acrylonitrile copolymers, styrene-butadiene copolymers, styrene-maleic anhydride copolymers copolymerized with styrene alone or with the additional monomers listed for styrene, polyplenylene ether, polyphenylene sulfide, polysulfone, polyurethane, polyamides, i.e., nylons such as nylon 6, nylon 6.6, nylon 6.9, nylon 6.10, nylon 6.12, nylon 11, nylon 12, and amorphous nylons, polyamideimide, polycaprolactone, polyglutarimide, poly(methyl methacrylate), other $C_1$ to $C_8$ poly(alkyl(meth)acrylates) and polycarbonates.

Particularly of interest are polymers of vinyl chloride, that is, homopolymers of vinyl chloride and copolymers containing at least 80 weight percent units derived from vinyl chloride, such as copolymers of vinyl chloride with ethylene, propylene, vinyl acetate, and the like. Further of interest are polymers of vinyl chloride containing impact modifiers, such as core/shell polymers with cores of acrylate or butadiene-based rubbers and with shells of methyl methacrylate, methyl methacrylate/styrene or styrene/ acrylonitrile.

Also of interest are ABS polymers, that is, styrene/acrylonitrile copolymers containing a rubbery phase of a butadiene, butadiene/styrene, or butadiene/acrylonitrile rubber, and usually further containing a graft,copolymer of styrene/acrylonitrile onto such a rubbery polymer. Related polymers of interest are staged polymers of styrene with acrylonitrile formed in the presence of other elastomeric materials, such as polyacrylate rubbers or ethylene-propylene-based rubbers.

Also of interest are those polar polymers with aromatic rings (aryl groups) directly in the polymer chain, that is, with the polymer chain containing an aromatic group bonded at two sites on the aromatic ring. Such polymers include polycarbonate, such as bis(phenol A) polycarbonate, polysulfones, such as polyphenylene sulfone, polyether-sulfones, and the like, polyarylates, which are wholly aromatic polyesters derived formally from bisphenols and aromatic dicarboxylic acids, poly(ether imides), wherein the chain contains both ether groups and the imide group which is formally derived from an aromatic dicarboxylic acid and an aromatic amine. Further of interest are poly(phenylene oxide), such as poly(2,6-dimethylphenylene) oxide, also known as poly(2,6-dimethylphenylene) ether.

Also of interest are polymers containing both aromatic rings and aliphatic groups directly in the chain, such as polyesters such as poly(ethylene terephthalate), poly(butylene terephthalate), and the like, and polyamides, such as poly(alkylene terephthalamides).

Liquid crystal polymers, useful for reinforcing plastic matrices and providing a high modulus, also will process more readily in the presence of small amounts of the processing aid polymers as described in the present invention. Such liquid crystal polymers include those which are polymers containing units derived from p-hydroxybenzoic acid, 6-hydroxy-2-naphthoic acid, and optionally p-aminobenzoic acid.

As noted, the processing aid polymers used in the present invention are segmented copolymers, which includes block and graft copolymers with segments of defined molecular weight of a polyolefin and a polymer comprising predominantly units derived from a methacrylate ester. There are a variety of ways to prepare such segmented copolymers known to the art, but those methods tend to prepare copolymers with segments of lower molecular weight. A preferred method for preparing such polymers is disclosed in US-A-4,957,974 and is the general method by which the individual copolymers are produced in Example 1 which follows. Control of the polymerization conditions, such as radical flux, is required to produce a high molecular weight of the grafted polymer and to avoid degradation of the pre-formed polyolefin. Alternative methods, such as aqueous dispersion processes, may be utilized to prepare the segmented polyolefin/ /polymethacrylate polymer, as long as control of polymerization conditions is maintained to achieve the desired molecular weight parameters.

By non-rubbery polyolefin we mean that the polyolefin is either crystalline at room temperature or, if amorphous, has a glass temperature greater than about 0°C. The non-rubbery polyolefin will exhibit a modulus of at least about 100,000 psi (6.89 x $10^5$ kPa).

As with most methods for making segmented copolymers, free polyolefin or polymethacrylate may also be present. Removal of such impurities is costly, and the segmented polymers may generally be used even if ungrafted moieties are present.

The matrix resins are well-known to the art and usually commercially available. Both they and the additive polymer may contain stabilizers, such as thermal, ultraviolet, or anti-oxidant stabilizers, fillers, impact modifiers, colorants, dyes, lubricants, and the like. Such additives will generally not have an adverse compensating effect on the improved processing imparted by the addition of the processing aid polymer.

Usually the matrix polymer and the segmented polymer can be dry-blended prior to processing, but the segmented polymer may be added to the molten matrix polymer during processing. The blends may be compounded and processed by any of several techniques known to the polymer processing art, such as by milling, calendering, injection moulding, extrusion, such as into profiles, sheet, or film, and the like.

Demonstration of the processing improvement may be seen in any of several ways, depending on the matrix polymer. In some cases, the matrix polymer is conveyed through the processing at lower temperatures, or lower shear rates, or less extruder work, which imparts less thermal history to the blend. In other cases, the "fluxing" of the polymer is improved, so that the time for thermal degradation prior to processing the "fluxed" polymer is reduced. In other cases, the output from the processing, such as an extrudate, can be more readily handled during such processing steps, such as pelletizing, film formation, film stretching, and the like.

The segmented polymers of the blends of the present invention allow the matrix polymer to be used more effectively in preparing many articles of commerce, such as articles from PVC, such as pipe, film, sheet, containers, and the like.

More specifically, these blends are appropriate for injection moulded pipe fittings, plumbing valves and housings, garden tools, automotive parts, communications devices, business machine parts (housings, enclosures, bases, and connectors), parts and housings for small and large appliances (motor housings, handles, covers, bases, doors, ducts, consoles, refrigerator liners, crisper trays, washer dispenser cups, knobs), car mats, toys, sporting goods, closures for bottles and jars, footwear, battery cases, and electrical plugs, connectors, housings, receptacles, and connection boxes.

Processability improvements are also important in extruded profiles, sheet, and film. Appropriate rigid extruded parts include pipe, tubing, and conduit (including water pipe, large diameter pipe, drainage pipe, vent pipe, and agricultural and irrigation pipe), construction profiles (siding, mobile home skirting, gutters, downspouts, weather stripping, awnings, window shades, and profiles for windows, patio doors, sliding doors, and storm windows). Appropriate extruded flexible parts include wire coatings, garden hose, film for packaging (blister packaging, shrink-wrap), and profiles for medical applications and automotive tops, trim and protective trips.

Calendering operations will also be improved by modifying vinyl chloride polymer with the segmented copolymer. Applications include vinyl flooring, rigid sheet for packaging, and sheet or film either laminated or extruded directly onto fabric (automotive or furniture seating) or board (wall coverings or furniture). Blow moulding processability of bottles and other articles will also be improved by addition of the segmented graft copolymer to the vinyl chloride resin.

Articles from the polar engineering resins include housings and containers for electrical and electronic equipment and the like.

## EXAMPLE 1

In Example 1 is listed a series of segmented copolymers, otherwise known as graft copolymers, of predominantly methyl methacrylate (MMA) polymerized in the presence of a polypropylene or ethylene-propylene-diene terpolymer (EPDM) by the method taught in US-A-4,957,974.

The polyolefin content of the graft copolymer was determined by interpolation of the carbon content between pure acrylic (60.0% carbon) and pure polyolefin (85.7% carbon). The per cent of acrylic grafted is the per cent of the acrylic polymer that is attached to polyolefin (that is, not removed by three THF dissolution/acetone precipitations for the EPDM graft copolymers and not removed by two hot xylene dissolutions/cold xylene precipitations for the polypropylene graft copolymers). The molecular weights listed are of the acrylic in the first soluble fraction.

In that Example the polypropylene-acrylic graft copolymer was made by polymerizing a 5% ethyl acrylate (EA) - 95% methyl methacrylate (MMA) monomer mixture in the presence of polypropylene of mfr=0.4 (weight ratio of polypropylene:monomer=0.67:1. Radicals were generated from di-tertiary-butyl peroxide (DTBPO) at the rate of 0.00007 moles per litre per minute (radical flux). Monomer and initiator were fed over 120 minutes and the theoretical (100% conversion) solids at the end of the reaction was 55%.

A 6.6 litre reactor equipped with a pitched-blade turbine agitator (375 rpm) was charged with 1780 g of the hydrocarbon solvent and 880 g polypropylene (mfr=0.4) and heated to 160°C. The mixture was stirred for two hours and then the temperature was decreased to 150°C for one hour. Over a two minute period two solutions were added. The first consisted of 1.22 g of di-t-butyl peroxide in 20 g of the hydrocarbon solvent. The second consisted of 0.0002 mg of monomethyl ether of hydroquinone (MEHQ) and 0.05 g of di-t-butyl peroxide in 1.1 g of ethyl acrylate and 21 g of methyl methacrylate. For the next 118 mimutes a feed of 13 mg MEHQ and 2.70 g of di-t-butyl peroxide in 66 g of ethyl acrylate and 1253 g of methyl methacrylate was added at the same feed rate as the second feed. This feed schedule should produce a radical flux of 0.00007 during the feed time. After the feed was complete the reaction was held at 150°C for an additional 15 minutes. Then it was devolatilized by passing through a 30 mm Werner-Pfleiderer extruder with two vacuum vents at 200-250°C.

In this Example, that method was followed with the variations indicated by the data in Table 1 which follows.

Table 1

| Polyolefin-Acrylic Graft Copolymers | | | | | |
|---|---|---|---|---|---|
| Polymer | Polyolefin (%) | Acrylic Composition MMA / EA / MAA | Per Cent of Acrylic Grafted | Molec. Wt. | |
| | | | | wt av | no av |
| EX. 1-A | EPDM (62%) | 98 / 2 | 20 | 175,000 | 72,100 |
| EX. 1-B | EPDM (57%) | 98 / 2 | 14 | 244,000 | 94,700 |
| EX. 1-C | EPDM (56%) | 98 / 2 | 12 | 356,000 | 128,000 |
| EX. 1-D | EPDM (58%) | 98 / 2 | 26 | 114,000 | 31,900 |
| EX. 1-E | EPDM (58%) | 93 / 2 / 5 | 12 | 127,000 | 31,700 |
| EX. 1-F | PP (66%) | 98 / 2 | | | |
| EX. 1-G | PP (61%) | 93 / 2 / 5 | | | |
| EX. 1-H | PP (57%) | 98 / 2 | | | |
| EX. 1-I | PP (55%) | 93 / 2 / 5 | | | |
| EX. 1-J | EPDM (65%) | 93 / 2 / 5 | | | |
| EX. 1-K | PP (47%) | 95 / 5 | 11 | 130,00 | 40,700 |
| EX. 1-L | PP (45%) | 95 / 5 | | | |
| EX. 1-M | PP (45%) | 95 / 5 | | | |

## EXAMPLE 2

This example illustrates the improved processing of poly(vinyl chloride) with certain of these segmented copolymers. The processability is tested on the mill and several features of the processing are rated. In all cases the graft copolymer did promote the fusion of the PVC resin. The polyolefin-acrylic graft copolymers with a high molecular weight acrylic graft improve the other processability factors, although they are not fully equivalent to the improvements imparted by a commercial very high molecular weight methyl methacrylate-based processing aid (additive 2-C). Additive 2-A is a commercial medium MW methyl methacrylate/ /ethyl acrylate 70/ /30 polymer useful in processing PVC copolymers, and Additive 2-B, is a lubricating processing aid copolymer containing a low MW butyl acrylate/styrene core and a high MW methyl methacrylate shell. Results are summarized in Table 2. Here, 4 g processing aid are mixed with 204 g. masterbatch, which is Geon 85, a medium molecular-weight (K=60) PVC homopolymer with 2 phr organotin stabilizer in a blender at 50 to 93°C, followed by milling on a two-roll mill at a temperature of 175°C., then sheeting off the blend and determining the processing performance by comparison with Examples 2-A, 2-B, and 2-C.

E = excellent, VG = very good, G = good, F = fair,

P = poor, VP = very poor, VVP = very, very poor

Table 2

| | | | | | | | |
|---|---|---|---|---|---|---|---|
| Polyolefin-Acrylic Graft Copolymer Processing Aids for PVC | | | | | | | |
| Add. | Time to Band, sec. | Time to Flux, sec. | Hot Strength | Thermoplastici-ty | Rolling Bank | Edge | Release |
| Ex. 1-A | 90 | 115 | P | P | P(20) | F | F |
| Ex. 1-B | 120 | 155 | F | P | P(20) | P | G |
| Ex. 1-C | 90 | 105 | P | P | P(20) | G | G |
| Ex. 1-D | 30 | 50 | VP | VP | P(20) | VP | P |
| Ex. 1-E | 25 | 70 | VP | VP | P(20) | VP | VVP |
| Ex. 1-F | 85 | 130 | VP | VP | P(20) | VP | P |
| Ex. 1-G | 110 | 145 | VP | VP | P(20) | VP | VP |
| Ex. 1-H | 65 | 85 | VP | VP | P(20) | VP | F |
| Ex. 1-I | 265 | 300 | VP | VP | P(20) | VP | F |
| Ex. 1-J | 170 | 195 | VP | VP | VP(25) | VP | F |
| Ex. 2-A | 40 | 55 | P | P | P(18) | VP | G |
| Ex. 2-B | 40 | 60 | P | P | VP(25) | P | F |
| Ex. 2-C | 30 | 45 | G | G | E(<10) | VG | VG |

## EXAMPLE 3

In Example 3 are shown additional experiments with a Haake Rheocord, which shows the time to peak torque and the value of that torque; the earlier the time to peak torque, the greater the improvement in fusion. In this experiment, high levels of additives are used to exaggerate the effect. Here, K-58 was used which contained a thermal stabilizer for PVC. Processing aid effect was measured in a Haake Rheocord at 80 rpm and 180°C.

Table 3

| | | |
|---|---|---|
| PVC Processing Aid | | |
| Processing Aid | time to peak torque, sec | torque at 198°C, m-g |
| NONE | 360 | 1360 |
| 8.3 % Ex. 2-C | 162 | 1430 |
| 8.3 % Ex. 1-K | 90 | 1960 |

## EXAMPLE 4

Additional experiments were performed with Ex. 1-A graft copolymer at different levels. The results indicate that it promotes fusion at all levels. The results also indicate that the effect is greater than that of a polypropylene or of an acrylic polymer of similar molecular weight. Conditions were those of Example 3.

Table 4

| PVC Processing Aid | | |
|---|---|---|
| Processing Aid | time to peak torque, sec | torque at 198°C, m-g |
| NONE | 240 | 1450 |
| 1 % Ex. 2-C | 120 | 1530 |
| 3 % Ex. 2-C | 140 | 1480 |
| 1 % Ex. 1-K | 160 | 1420 |
| 3 % Ex. 1-K | 110 | 1560 |
| 3 % PMMA (MW 1.1 x $10^5$) | 145 | 1650 |
| 3 % PP (MW 3 x $10^5$) | 195 | 1450 |

EXAMPLE 5:

Injection Moulding Additive for High Performance Polymers

This experiment demonstrates that certain high performance polymers with excellent temperature resistance, but which mould only with difficulty at high temperatures, are improved in processing by the presence of olefin/methacrylate segmented copolymers. The results in Table 5 indicate that the graft copolymers decrease the temperature and pressure requirements for moulding. In these experiments 15 phr of the graft copolymer was used and very dramatic decreases were observed. Similar results, in that improved processing is observed, will be observed from lower levels of the graft copolymer, levels that will not adversely affect the performance.

In these Examples, the segmented copolymer is that of Example 1-M. The polyarylate is Amoco's Ardel DM-100, mfr 4.5 g/ 10 min at 375°C, presumed to be a bisphenol isophthalate fully aroatic polyester. The polysulfone is Amoco's Udel P-1700, mfr 6.5 g/ 10 min. at 343°C., presumed to be a condensation product of 2,2-bis(4'-hydroxyphenyl)propane and 4,4'-dichlorodiphenyl sulfone. PPS is the designation for poly(phenylene sulfide), Phillips Petroleum's Ryton P-4, m.p. 285°C, mfr 60 (5 kg., 316°C, 0.21 cm. orifice). PES is ICI's Victrex polyethersulfone, presumed to be the equivalent of the condensation product of 4,4'-dichlorodiphenyl sulfone and hydroquinone. LCP designates a liquid crystal polymer, Celanese Vectra A 950, m.p. 280°C., presumed to be prepared by condensation of p-hydroxybenzoic acid (73%) and 6-hydroxy-2-naphthoic acid (23%). PEI designates General Electric Ultem 1000, a polyether imide presumably prepared from pyromellitic dianhydride and an aromatic diamine.

Blends were made in an intermeshing co-rotating twinscrew extruder with a length/diameter ratio of 10/1. The compounder was run at 200 rpm, and temperatures were adjusted for each blend and control to achieve a "good" (uniform, processable) melt, which melt was then directly fed to a 38 mm. single screw pelletizing extruder. The pellets were dried and injection moulded on a reciprocating screw injection moulding apparatus. The injection moulding temperatures and the pressures in the mould are shown in Table 5.

Table 5

| Effect of Segmented Copolymers on Injection Moulding of High Performance Polymers | | | |
|---|---|---|---|
| Polymer | Ex.1-M phr | Injection Moulding Set Temperatures, °C Rear/Centre/Nozzle | Injection Moulding Pressures, kPa Inject/Hold |
| Polyarylate | 0 | 299 / 371 / 332 | 11020 / 4130 |
| Polyarylate | 15 | 260 / 310 / 315 | 6890 / 2760 |
| Polysulfone | 0 | 299 / 354 / 343 | 13090 / 4130 |
| Polysulfone | 15 | 274 / 315 / 315 | 7580 / 2410 |
| PPS | 0 | 260 / 338 / 315 | 5510 / 2070 |
| PPS | 15 | 274 / 315 / 315 | 5510 / 2410 |
| PES | 0 | 315 / 371 / 332 | 13090 / 4130 |
| PES | 15 | 274 / 315 / 315 | 8270 / 2760 |
| LCP | 0 | 299 / 327 / 321 | 5510 / 2760 |
| LCP | 15 | 218 / 246 / 260 | 6890 / 2410 |
| PEI | 0 | 304 / 377 / 343 | 12400 / 4480 |
| PEI | 15 | 274 / 304 / 310 | 7580 / 2410 |

EXAMPLE 6

This example illustrates the improvement in the melt strength of ABS imparted by the segmented copolymer. A commercial ABS (Cycolac DFA-R) and a polypropylene-methacrylate graft copolymer (similar to that designated Example 1-K) were compounded on a 30 mm co-rotating, twinscrew extruder and pellets extruded. Sheets (24 X 24 X 0.15 cm) were pressed from these pellets on a 100 ton press. The sleet samples were tested for melt strength by a sag test at 190°C. Unmodified ABS sagged 0.75 inches (1.91 cm.) in 14.5 minutes. ABS containing 4.76% graft copolymer had sagged less than 0.5 inches in 25 minutes. ABS containing 12.6% graft copolymer also sagged less than 0.5 inches (1.27 cm.) in minutes. The use of such segmented copolymers as melt strength modifiers in ABS should permit improved processing (thermoforming, blow moulding, foaming) of grades of ABS that do not process swell.

**Claims**

1.  A method for improving the processing of polar resin, comprising
    (a) admixing the polar resin with from 1 to 15 parts per hundred parts of resin, by weight, of segmented polymer comprising segments of
    (1) non-polar, non-rubbery polyolefin having a weight-average molecular weight between 50,000 and 1,000,000;
    (2) polymer derived from at least 80% by weight of alkyl, aryl, substituted alkyl, substituted aryl, alkaryl, or substituted methacrylate ester and at most 20% by weight of an acrylic or styrenic monomer copolymerized therewith, having a weight-average molecular weight between 20,000 and 200,000;
    (b) heating the mixture with agitation to a temperature whereby the blend is fluxed.

2.  The method of Claim 1 wherein the polyolefin comprises polypropylene, polyethylene, or a copolymer thereof.

3.  The method of Claim 1 or 2 wherein the methacrylate ester comprises methyl methacrylate.

4. The method of Claim 1,2 or 3 wherein the polar polymer comprises vinyl chloride homopolymer or a copolymer containing at least 80 weight percent of units derived from vinyl chloride or acrylonitrile-butadiene-styrene or engineering resin containing aryl groups in the main chain.

5. The method of Claim 4 wherein the resin comprises a polyarylate, polysulfone, poly(ether sulfone) or poly(ether imide).

6. A blend comprising engineering resin containing aryl groups in its main chain and from 1 to 15 parts per hundred parts of engineering resin, by weight, of segmented polymer comprising segments of
(1) non-polar polyolefin having a weight-average molecular weight between 50,000 and 1,000,000;
(2) polymer derived from at least 80% by weight of alkyl, aryl, substituted alkyl, substituted aryl, alkaryl, or substituted methacrylate ester and at most 20% of acrylic or styrenic monomer copolymerized therewith, having a weight-average molecular weight between 20,000 and 200,000.

7. The blend of Claim 6 wherein the engineering resin comprises a liquid crystal polymer or polyarylate, polysulfone, poly(ether sulfone) or poly(ether imide).

8. A method of processing polar resin wherein, in admixture with the polar resin in an amount of 1 to 15 parts per hundred parts of resin by weight, segmented copolymer comprising segments of
(1) non-polar, non-rubbery polyolefin having a weight-average molecular weight between 50,000 and 1,000,000;
(2) polymer derived from at least 80% by weight of alkyl, aryl, substituted alkyl, substituted aryl, alkaryl, or substituted methacrylate ester and at most 20% by weight of an acrylic or styrenic monomer copolymerized therewith, having a weight-average molecular weight between 20,000 and 200,000;
is used to improve the processing characteristics of the polar resin.

9. A method of Claim 8 wherein the polar resin is used in a mixture formed by a method as claimed in any of Claims 1 to 5.

EP 0 560 496 A1

**European Patent Office**

**EUROPEAN SEARCH REPORT**

Application Number

EP 93 30 1041

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | EP-A-0 335 649 (ROHM AND HAAS COMP)<br>* page 5, line 10 *<br>* page 8, line 51 - line 62; table xliii *<br>--- | 1 | C08L101/00<br>//(C08L101:00,51<br>:06) |
| A | EP-A-0 033 220 (ROHM AND HAAS COMP)<br>* example 22 *<br>----- | 1 | |
| | | | **TECHNICAL FIELDS SEARCHED (Int. Cl.5)**<br><br>C08L<br>C08F |

The present search report has been drawn up for all claims

| Place of search | Date of completion of the search | Examiner |
|---|---|---|
| THE HAGUE | 13 MAY 1993 | Dieter Schüler |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

10